# EUROPÄISCHE PATENTSCHRIFT

(11) **EP 0 475 065 B1**
(45) Veröffentlichungstag und Bekanntmachung des Hinweises auf die Patenterteilung: **17.11.1994**
(21) Anmeldenummer: 91113074.8
(22) Anmeldetag: 03.08.1991
(51) Int. Cl.: B60Q 3/02

(54) **Innenleuchte für Kraftfahrzeuge**
Courtesy light for vehicle
Plafonnier de véhicule

(30) Priorität: 16.08.1990 DE 4025816
(43) Veröffentlichungstag der Anmeldung: 18.03.1992
(73) Patentinhaber: Hella KG Hueck & Co., 59552 Lippstadt (DE)
(72) Erfinder: Rehborn, Heinz, W-4780 Lippstadt (DE); Scharlau, Stephan, W-4722 Ennigerloh 2 (DE); Helfmeier, Ulrich, W-4780 Lippstadt (DE); Gotowik, Ralf, W-4600 Dortmund 70 (DE); Reimann, Gerd, W-4780 Lippstadt (DE); Bahne, Hans-Josef, W-4763 Ense-Lohe (DE)

(56) Entgegenhaltungen:
- DE-A- 3 332 191
- US-A- 4 760 500

## Beschreibung

Die Erfindung betrifft eine Innenleuchte für Kraftfahrzeuge, bestehend aus einem Gehäuse, einem Schalteinrichtungsteil und mindestens einem Lichtscheibenteil.

Bekannte Leuchten dieser Art besitzen einen festgelegten Innenaufbau, der sich entweder als Innenlicht, Lesespot oder als Kombination beider Typen darstellt. Jedoch sind diese Leuchten von Beginn ihrer Herstellung an für einen bestimmten Gebrauchszweck konzipiert und lassen in der Regel keine Abwandlung ihrer Nutzungsart, ihrer Baugröße oder die Kombination verschiedener Lichtscheibenarten zu. Es ist deshalb Aufgabe der Erfindung, eine Innenleuchte zu schaffen, die baukastenartig als Zwei- oder Einkammer leuchte mit jeweils verschiedenen Lichtscheibenarten und Schaltelementen bestückt werden kann und wobei nur geringe Werkzeugänderungen für andere Gehäuseabmessungen notwendig sind. Diese Aufgabe wird erfindungsgemäß durch die Anwendung folgender Merkmale gelöst:
- der Schalteinrichtungsteil ist als separates Teil ausgebildet,
- der Schalteinrichtungsteil setzt sich aus einem Sockel, den darin eingebetteten Schaltern und Kontaktfedern und der Abdeckkappe zusammen,
- die Abdeckkappe weist im Querschnitt den gleichen Oberflächenverlauf auf wie die Lichtscheibenteile,
- der Sockel ist mit dem Gehäuse verrastet,
- der Sockel weist zwei Aufnahmeversenkungen und die Abdeckkappe wahlweise eine oder zwei öffnungen für den Durchtritt der Schaltbedienungsteile auf,
- der Lichtscheibenteil oder -teile zwischen Schalteinrichtungsteil und dem jeweiligen Gehäuseende sind lösbar verrastet,

In einer vorteilhaften Ausführungsform der Erfindung weist der Schalteinrichtungsteil auf dem dem Lichtscheibenteil benachbarten Rand eine stufige Absenkung auf, deren Tiefe der Stärke der Lichtscheibenwandung entspricht, so daß die Lichtscheibenteile mit ihrem dem Schalteinrichtungsteil benachbarten Rand auf der stufigen Absenkung aufliegen. Dadurch ist ein für den Betrachter harmonischer und spaltfreier Übergang zwischen Lichtscheibe und Schalteinrichtungsteil gewährleistet.

Damit die Lichtscheibenteile zwischen Schalteinrichtungsteil und Gehäuseende montagefreundlich, d. h. schräg eingesetzt werden können, weisen sie auf der dem Schalteinrichtungsteil benachbarten Seite bei einem in das Lichtscheibeninnere vorspringenden Wandungsteil einen mit schrägen Vorsprüngen versehenen Rand auf, der das Schalteinrichtungsteil hintergreift. Somit ist auch für das Auswechseln der Glühlampen ein schnelles und unkompliziertes Entfernen und Einsetzen der Lichtscheiben gewährleistet.

Je nach Bedarf ist es von Vorteil, das Lichtscheibenteil der Innenleuchte als Streulicht, Lesespot oder als Kombination hiervon auszulegen, was eine schnelle Anpassung an Kundenwünsche garantiert und bei Lagerhaltung einen sofortigen Zusammenbau und Montage ermöglicht. Bei einer weiteren zweckmäßigen Ausgestaltung der Erfindung enthält der Sockel des Schalteinrichtungsteils Kontaktfedern, deren Aufnahmeausnehmungen so ausgestaltet sind, daß die glühlampenverbindende Kontaktfeder des Schalters auf Umschlag einsetzbar ist. Dies verringert die Lagerhaltung der für die Erstellung der Leuchte notwendigen Einzelteile und ermöglicht, die vorhandenen Teile für verschiedenste Ausführungen zu benutzen. Dabei ist es auch vorteilhaft, daß die Kontaktfedern im Sockel durch angeformte Rastlappen exakt positionierbar und arretierbar sind, was für eine schwingungsbelastete Innenleuchte und deren Funktionszuverlässigkeit von großer Bedeutung ist. Um der Leuchte ein harmonisches bzw. gefälliges Aussehen zu verleihen, aber auch um sie mit der umgebenden Wand sauber abschließen zu lassen, weist die Abdeckkappe bei der Anordnung als Seitenteil an dem dem Lichtscheibenteil gegenüberliegenden Ende einen Rand auf, der dem Rand des Lichtscheibenteils entspricht. Dieses gilt in gleicher Weise für die Abdeckkappe, deren Seitenwände entsprechend den Seitenrändern der Lichtscheibenteile ausgebildet sind und eine Abwinklung aufweisen, die an ihrem freien Ende auf der Innenseite der Abdeckkappe eine den Sockel hintergreifende Wulst aufweisen. Mit dieser Verrastung werden die abgewinkelten Ränder der Abdeckkappe mit dem Sockel verbunden. Zur Verbindung des mittleren Teils der Abdeckkappe mit dem Sockel, weist die Abdeckkappe an seiner Rückseite federnde Arme auf, die in öffnungen der Platte des tischförmigen Sockels federnd einrasten, und somit ist insgesamt eine vierfache Verrastung der Abdeckkappe mit dem Sockel des Schalteinrichtungsteils gegeben. In weiteren vorteilhaften Ausführungen ist zum einen der Sockel tischartig ausgebildet und mit den Enden seiner Füße selbstrastend nahe dem Bodenbereich des Gehäuses verrastet. Zum anderen sind die Schalter in die Abdeckkappe selbstrastend eingesetzt. Beide Vorzüge kommen der einfachen und deshalb kostengünstigen Montage der Leuchte zugute, da für beide Teile kein Werkzeug erforderlich ist.

Zwei Ausführungsbeispiele der Erfindung werden im folgenden anhand einer Zeichnung näher erläutert.

Es zeigen:
- Figur 1: eine Innenleuchte mit zwei Lichtscheiben im Schnitt gemäß der Linie A-A in Figur 2,
- Figur 2: die Innenleuchte im Schnitt gemäß der Linie B-B in Figur 1,
- Figur 3: die Innenleuchte im Schnitt gemäß der Linie C-C in Figur 1,
- Figur 4: eine Innenleuchte mit einer Lichtscheibe im Schnitt gemäß der Linie A-A in Figur 5,
- Figur 5: die Innenleuchte im Schnitt gemäß der Linie B-B in Figur 4,
- Figur 6: die Innenleuchte im Schnitt gemäß der Linie C-C in Figur 4.

Die Innenleuchte setzt sich aus einem Gehäuse (1), den Lichtscheibenteilen (2, 3), einem Schalteinrichtungsteil (4) und den Glühlampen (5) zusammen. Das Gehäuse besteht aus einem breiten Blechstreifen, dessen Enden (6) abgewinkelt sind, und das mit seinen freien Enden (7) auf der sie aufnehmenden Karosseriewand (8) aufliegt. Um das Gehäuse gegen Herausrutschen aus der Karosseriewand (8) zu fixieren, werden freigeschnittene Zungen (32) mit warzenartigen Erhebungen, die sich an den Enden (6) befinden, vom Gehäuseinnenraum gegen die Rückseite der Karosseriewand (8) gebogen. Auf der Innenseite der Enden (6) sind rinnenförmige Ausbuchtungen (9) angeordnet, über die an die Lichtscheiben (3, 4) angeformte zungenartige Keile (10) mit dem Gehäuse (1) verrasten. Die Seitenwände (11) der Längsausdehnung des Gehäuses (1) sind ebenfalls abgewinkelt, aber wesentlich kürzer als die stirnseitigen Enden (6) des Gehäuses (1). In den Boden (12) des Gehäuses (1) sind Zungen (13) freigestanzt, die abgewinkelt der Glühlampenaufnahme dienen. In eine Freischneidung (14) für die Zunge (13) der Glühlampenaufnahme ist ein Kunststoffteil (15) wahlweise in den Boden (12) eingesetzt, welches die Kontaktfeder (16) der einen Glühlampe (5) isolierend aufnimmt. Während die Glühlampe (5) unter der Lichtscheibe (2) stehend angeordnet ist und als Lesespot wirksam wird, ist die Glühlampe (5) unter der Lichtscheibe (3) liegend angeordnet und durch einen Reflektor (17) hinterlegt, wodurch das Innenraumstreulicht erzeugt wird.

Im mittleren Bereich des Gehäuses (1) ist der Schalteinrichtungsteil (4) angeordnet, der sich aus Sockel (18), dem Schalter (19) mit zugehörenden Kontaktfedern (20) und einer Abdeckkappe (21) zusammensetzt. Der Sockel (18) ist dabei tischartig ausgebildet und rastet mit den Enden seiner Füße (22) nahe dem Boden (12) in den in den Seitenwänden (11) dafür vorgesehenen Ausstanzungen (23) ein. In dem Sockel (18) sind weiterhin Aufnahmeausnehmungen (24) angeordnet, in die die Schalter (19) eingesteckt sind. Dabei reichen die Anschlußkontakte (25) bis an die auf Umschlag einsetzbaren Kontaktfedern (20) heran, die die Verbindung zu den Glühlampen (5) herstellen. Die Kontaktfedern (20,36) selbst sind durch angeformte Rastlappen (26) exakt im Sockel (18) positioniert und arretiert. Von oben werden die Schalter (19) im Sockel (18) durch die Abdeckkappe (21), in der sie selbstrastend eingesetzt sind, in ihren Aufnahmeausnehmungen (24) gehalten. Zur Verbindung zwischen Sockel (18) und Abdeckkappe (21) sind auf der Unterseite der Abdeckkappe (21) nicht weiter dargestellte federnde Arme angeordnet, die in öffnungen des Sockels (18) federnd einrasten. Eine weitere Verbindung zwischen Abdeckkappe (21) und Sockel (18) des Schalteinrichtungsteils (4) erfolgt über die Seitenränder (30) der Abdeckkappe (21), die in ihrer Abwinkelung zu den Seitenwänden der Lichtscheiben (2, 3) fluchten und mit einer an ihrem freien Ende auf der Innenseite der Abdeckkappe befindlichen Wulst (31) den Sockel (18) an einer Kante (37) hintergreift. Zur Verbindung der Lichtscheibenteile (2, 3) mit der Abdeckkappe (21) des Schalteinrichtungsteils (4), sind auf der dem Schalteinrichtungsteil (4) benachbarten Seite an der Lichtscheibe (2, 3) Vorsprünge (27) angeordnet, die über Schrägen (33) in dazu passende Ausnehmungen (28) in der Abdeckkappe (21) eingreifen und somit beim Einsetzen der Lichtscheiben (2, 3) eine Führung darstellen. Zur Gewährleistung eines optisch sauberen Übergangs von Lichtscheiben (2, 3) zum Schalteinrichtungsteil (4) weist die Abdeckkappe (21) auf der dem Lichtscheibenrand benachbarten Seite eine stufige Absenkung (29) auf, deren Tiefe der Stärke der Lichtscheibenwandung entspricht. Somit schließt die Lichtscheibe (2, 3) beim Aufliegen auf die Absenkung (29) bündig mit der Abdeckkappe (21) ab. Aus dem zuvor Erwähnten geht hervor, daß die Montage der Lichtscheiben (2, 3) zuerst über die Vorsprünge (27) am Schalteinrichtungsteil (4) erfolgt und über die zungenartigen Teile (10) am Ende des Gehäuses über die Ausbuchtungen (9) verrastend beendet wird. Je nach Wunsch bzw. Veranlassung besteht die Möglichkeit, in die zur Glühlampenaufnahme freigeschnittenen Zungen (13) isolierende Kunststoff-Fassungen, wie in der Zeichnung ersichtlich, einzubringen, um entweder Plus oder Minus an Masse zu legen. Auch in diesem Fall ist nur die Anwendung eines abgewandelten Stanzwerkzeuges erforderlich, was bereits bei der Konstruktion des Werkzeugs berücksichtigt ist.

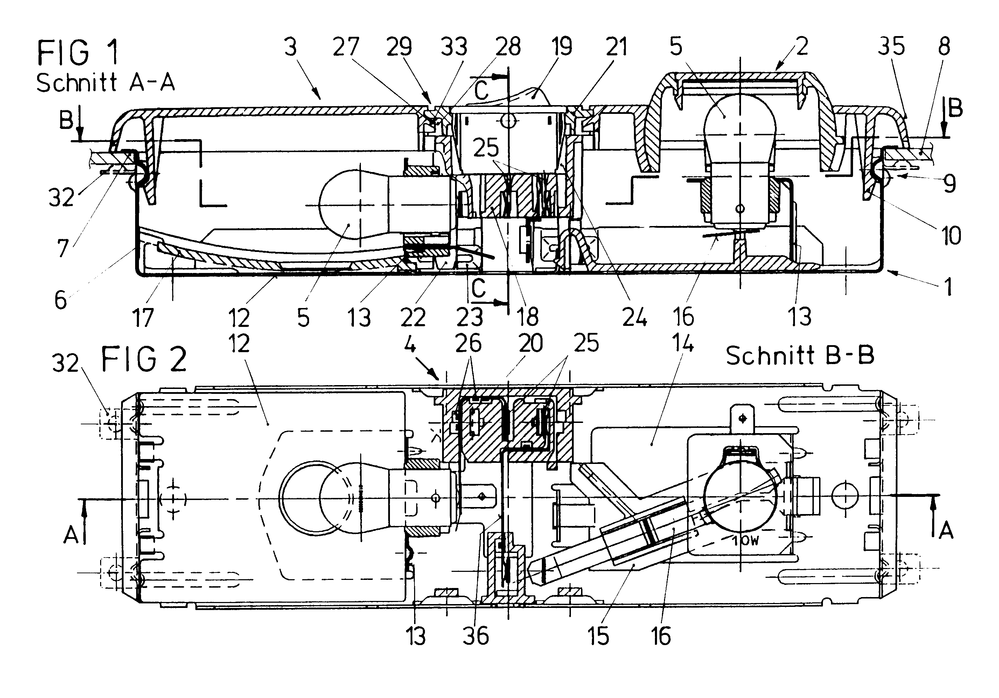

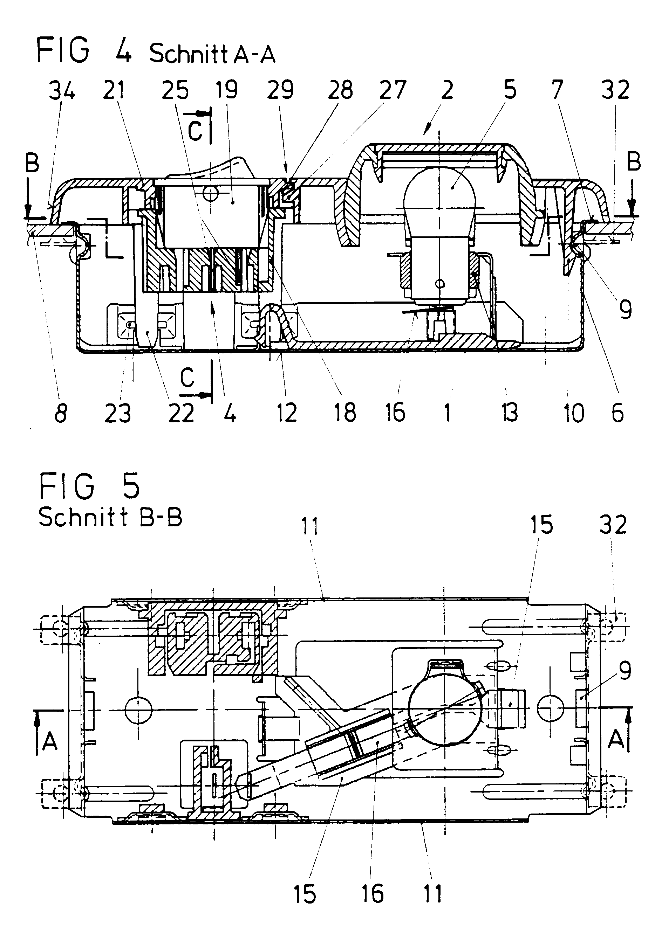

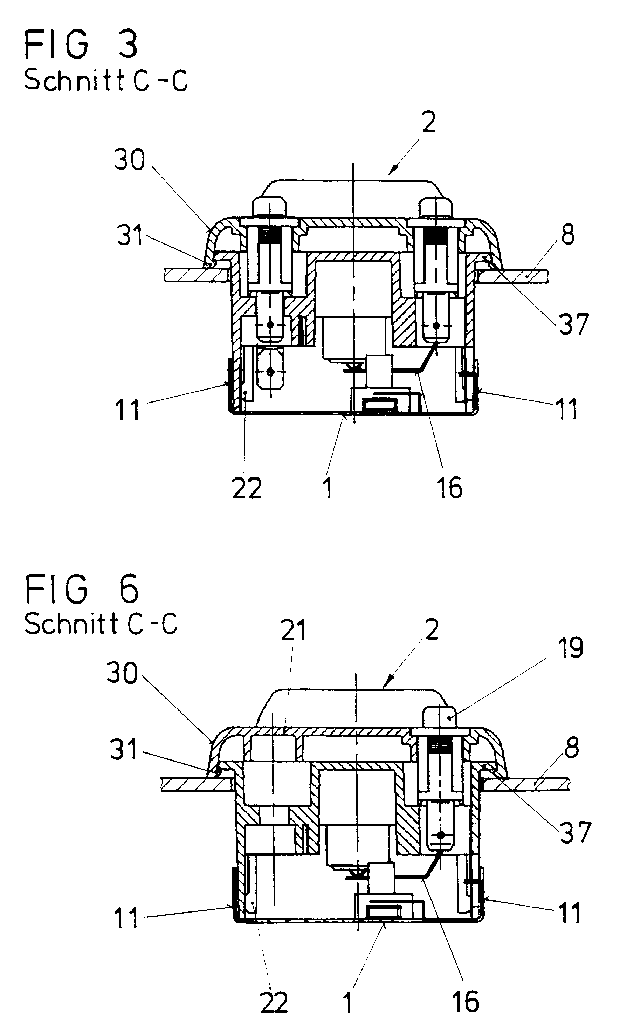

Da die Bauteile bis auf Ausnahmen identisch sind, gelten die Numerierungen der Zwei-Lichtscheibenausführungen in Figur 1 bis 3 ebenso wie für die Ein-Lichtscheibenausführung in Figur 4 bis 6.

Möchte man beispielsweise die Leuchte aus Figur 1 bis 3 in eine Leuchte mit zweifachem Innenstreulicht ausstatten, so ist dies verschaltungsmäßig über die auf Umschlag einsetzbare Kontaktfeder (20) möglich, die dann zusätzlich spiegelbildlich zu der in Figur 2 dargestellten Position der Feder (20) angeordnet wäre. Natürlich wäre in diesem Fall auch ein auf der rechten Seite angeordneter Reflektor (17) und die liegend angeordnete Glühlampe (5) erforderlich. Die dazu benötigte andere Version der Glühlampenhalterung (13) würde hierbei gleich bei der Fertigung des Gehäuses (1) im Stanzwerkzeug berücksichtigt.

## Patentansprüche

1. Innenleuchte für Kraftfahrzeuge, bestehend aus einem Gehäuse, einem Schalteinrichtungsteil und mindestens einem Lichtscheibenteil (2;3), gekennzeichnet durch folgende Merkmale:
a) der Schalteinrichtungsteil (4) ist als separates Teil ausgebildet,
b) der Schalteinrichtungsteil (4) setzt sich aus einem Sockel (18), den darin eingebetteten Schaltern (19) und Kontaktfedern (20) und einer den Sockel von außen abdeckenden Abdeckkappe (21) zusammen,
c) die Abdeckkappe (4) weist im Querschnitt den gleichen Oberflächenverlauf auf wie die Lichtscheibenteile (2;3),
d) der Sockel (18) ist mit dem Gehäuse (1) verrastet,
e) der Sockel (18) weist zwei Aufnahmeversenkungen (24) und die Abdeckkappe (21), wahlweise eine oder zwei öffnungen für den Durchtritt der Schalterbedienungsteile auf,
f) der oder die Lichtscheibenteile (2, 3) sind zwischen dem Schalteinrichtungsteil (4) und dem jeweiligen Gehäuseende (6) lösbar verrastet,

2. Innenleuchte nach Anspruch 1, dadurch gekennzeichnet, daß die Abdeckkappe des Schalteinrichtungsteils (4) auf dem dem Lichtscheibenteil (2, 3) benachbarten Rand eine stufige Absenkung (29) aufweist, deren Tiefe der Stärke der Lichtscheibenwandung entspricht.

3. Innenleuchte nach Anspruch 1, dadurch gekennzeichnet, daß die Lichtscheibenteile (2, 3) mit ihrem dem Schalteinrichtungsteil (4) benachbarten Rand auf der stufigen Absenkung (29) aufliegen.

4. Innenleuchte nach Anspruch 1 und 3, dadurch gekennzeichnet, daß die Lichtscheibenteile (2, 3) auf der dem Schalteinrichtungsteil (4) benachbarten Seite einen in das Lichtscheibeninnere vorspringenden Wandungsteil aufweisen, der mit Vorsprüngen (27) versehen ist, die den Rand des Schalteinrichtungsteils (4) hintergreifen.

5. Innenleuchte nach Anspruch 4, dadurch gekennzeichnet, daß die Vorsprünge (27) auf dem in das Lichtscheibeninnere vorspringenden Wandungsteil eine zum Boden (12) des Gehäuses (1) geneigt verlaufende Schräge (33) aufweisen.

6. Innenleuchte nach Anspruch 3 oder 4, dadurch gekennzeichnet, daß die Lichtscheibenteile (2 und 3) als Streulichtscheibe (3), als Lesespot (2) oder als Kombination hiervon ausgelegt sind.

7. Innen leuchte nach Anspruch 1, dadurch gekennzeichnet, daß der Sockel (18) des Schalteinrichtungsteils (4) Kontaktfedern (16) enthält, die die Schalter (19) mit den Glühlampen (5) verbinden und die in Aufnahmeausnehmungen (24) eingesetzt sind, welche so gestaltet sind, daß die Kontaktfeder (20) auf Umschlag einsetzbar ist.

8. Innenleuchte nach Anspruch 1 und 7, dadurch gekennzeichnet, daß die Kontaktfedern (20) in den Sockel (18) durch angeformte Rastlappen (26) positionierbar und arretierbar sind.

9. Innenleuchte nach Anspruch 1, dadurch gekennzeichnet, daß die Abdeckkappe (21) bei der Anordnung als Seitenteil an dem dem Lichtscheibenteil (2 oder 3) gegenüberliegenden Ende einen Rand (34) aufweist, der dem Rand (35) des Lichtscheibenteils entspricht.

10. Innenleuchte nach Anspruch 1 und 7, dadurch gekennzeichnet, daß der Sockel (18) tischartig ausgebildet ist, und mit den Enden seiner Füße (22) selbstrastend nahe dem Bodenbereich des Gehäuses (1) verrastet ist.

11. Innenleuchte nach Anspruch 1 und 9, dadurch gekennzeichnet, daß die Abdeckkappe (21) an seiner Rückseite federnde Arme aufweist, die in öffnungen der Platte des tischförmigen Sockels (18) federnd einrasten.

12. Innenleuchte nach Anspruch 9 und 11, dadurch gekennzeichnet, daß die Seitenwände (30) der Abdeckkappe (21) entsprechend den Seitenwänden der Lichtscheibenteile (2, 3) ausgebildet sind und eine Abwinklung aufweisen, die an ihrem freien Ende auf der Innenseite der Abdeckkappe (21) eine den Sockel (18) hingergreifende Wulst (31) aufweist.

13. Innenleuchte nach Anspruch 1 und 12, dadurch gekennzeichnet, daß die Schalter (19) selbstrastend in die Abdeckkappe (21) eingesetzt sind und in die Aufnahmeausnehmungen (24) des Sockels (18) hineinragen.

## Claims

1. Interior light for motor vehicles, consisting of a housing, a switching device part and at least one lens plate part (2; 3), characterised by the following features:
a) the switching device part (4) is formed as a separate part,
b) the switching device part (4) is composed of a base (18), the switches (19) and flexible contacts (20) embedded therein, and a cap (21) which covers the base from the outside,
c) in cross-section the cap (4) has the same surface profile as the lens plate parts (2;3),
d) the base (18) is locked to the housing (1),
e) the base (18) has two locating wells (24), and the cap (21) has one or two openings for passage of the switch operating parts, as required,
f) the lens plate part or parts (2;3) is/are releasably latched between the switching device part (4) and the respective housing end (6).

2. Interior light according to claim 1, characterised in that on the rim adjoined by the lens plate part (2, 3), the cap of the switching device part (4) has a stepped lowered area (29), the depth of which matches the thickness of the lens plate wall.

3. Interior light according to claim 1, characterised in that the lens plate parts (2, 3) rest on the stepped lowered area (29) by their rim adjoining the switching device part (4).

4. Interior light according to claims 1 and 3, characterised in that on the face adjoining the switching device part (4), the lens plate parts (2, 3) incorporate a wall part which projects into the lens plate interior and which is provided with projections (27) which engage the rim of the switching device part (4) from behind.

5. Interior light according to claim 4, characterised in that on the wall part which projects into the lens plate interior, the projections (27) incorporate an inclined plane (33) which slopes to the floor (12) of the housing (1).

6. Interior light according to claim 3 or 4, characterised in that the lens plate parts (2 and 3) are designed as a diffusing lens (3), as a reading light (2) or as a combination of these.

7. Interior light according to claim 1, characterised in that the base (18) of the switching device part (4) contains flexible contacts (16) which connect the switches (19) to the bulbs (5) and which are inserted into locating recesses (24) so fashioned that the flexible contact (20) can be inserted turned about.

8. Interior light according to claims 1 and 7, characterised in that the flexible contacts (20) are adapted to be positioned and locked into the base (18) by moulded locking tabs (26).

9. Interior light according to claim 1, characterised in that when it is arranged as a lateral part, at the end situated opposite the lens plate part (2 or 3) the cap (21) incorporates a rim (34) corresponding to the rim (35) of the lens plate part.

10. Interior light according to claims 1 and 7, characterised in that the base (18) is table-like, and is latched by the ends of its feet (22) in self-locking manner near to the floor area of the housing (1).

11. Interior light according to claims 1 and 9, characterised in that on its reverse the cap (21) incorporates sprung arms which resiliently engage in openings in the plate of the table-like base (18).

12. Interior light according to claims 9 and 11, characterised in that the side panels (30) of the cap (21) are formed to match the side panels of the lens plate parts (2, 3) and incorporate a bent angle portion which at its free end on the inside of the cap (21) incorporates a bead (31) which engages the base (18) from behind.

13. Interior light according to claims 1 and 12, characterised in that the switches (19) are inserted in self-locking manner into the cap (21) and project into the locating recesses (24) in the base (18).

## Revendications

1. Lampe d'intérieur pour véhicule automobile, constituée d'un boîtier, d'un élément de commutation et d'au moins un élément formant plaque d'éclairage (2 ; 3), caractérisée en ce que :
a) l'élément de commutation (4) est réalisé en tant que pièce séparée,
b) l'élément de commutation (4) est constitué d'un socle (18), des commutateurs (19) et des ressorts de contact (20) enrobés dans celui-ci et d'un capuchon de couverture (21) couvrant le socle depuis l'extérieur,
c) le capuchon de couverture (21) présente en section transversale la même allure de surface que les éléments de plaque d'éclairage (2 ; 3),
d) le socle (18) est encliqueté sur le boîtier (1),
e) le socle (18) présente deux renfoncements de réception (24), et le capuchon de couverture (21) présente au choix une ou deux ouvertures pour la traversée des éléments de manoeuvre de commutation,
f) le (les) élément(s) de plaque d'éclairage (2, 3) est (sont) encliqueté(s) de façon libérable entre l'élément de commutation (4) et l'extrémité (6) respective du boîtier.

2. Lampe d'intérieur selon la revendication 1, caractérisée en ce que le capuchon de couverture de l'élément de commutation (4) présente sur le bord voisin de l'élément de plaque d'éclairage (2, 3) un renfoncement (29) en gradin dont la profondeur correspond à l'épaisseur de la paroi de la plaque d'éclairage.

3. Lampe d'intérieur selon la revendication 1, caractérisée en ce que les éléments de plaque d'éclairage (2, 3) reposent avec leur bord voisin de l'élément de commutation (4) sur le renfoncement en gradin (29).

4. Lampe d'intérieur selon les revendications 1 et 3, caractérisée en ce que les éléments de plaque d'éclairage (2, 3) présentent sur le côté voisin de l'élément de commutation (4) une partie de paroi saillante dans l'intérieur de la plaque d'éclairage, partie qui est pourvue de saillies (27) qui entourent le bord de l'élément de commutation (4) par l'arrière.

5. Lampe d'intérieur selon la revendication 4, caractérisée en ce que les saillies (27) présentent sur la partie de paroi saillante dans l'intérieur de la plaque d'éclairage une pente (33) s'étendant en oblique vers le fond (12) du boîtier (1).

6. Lampe d'intérieur selon l'une ou l'autre des revendications 3 et 4, caractérisée en ce que les éléments de plaque d'éclairage (2, 3) sont conçus en tant que plaque à lumière diffusée (3), en tant que spot à lecture (2) ou en tant que combinaison des deux.

7. Lampe d'intérieur selon la revendication 1, caractérisée en ce que le socle (18) de l'élément de commutation (4) comporte des ressorts de contact (16) qui relient les commutateurs (19) aux ampoules (5) et qui sont mis en place dans des évidements de réception (24) qui sont réalisés de telle manière que les ressorts de contact (20) peuvent être mis en place par enveloppement.

8. Lampe d'intérieur selon les revendications 1 et 7, caractérisée en ce que les ressorts de contact (20) peuvent être positionnés et arrêtés dans le socle (18) par des pattes d'encliquetage (26) conformées.

9. Lampe d'intérieur selon la revendication 1, caractérisée en ce que le capuchon de couverture (21), dans le cas d'un agencement en tant que pièce latérale, présente sur l'extrémité opposée à l'élément de plaque d'éclairage (2 ou 3) un bord (34) qui correspond au bord (35) de l'élément de plaque d'éclairage.

10. Lampe d'intérieur selon les revendications 1 et 7, caractérisée en ce que le socle (18) est réalisé sous la forme d'une table, et s'encliquette automatiquement avec les extrémités de ses pieds (22) près de la région de fond du boîtier (1).

11. Lampe d'intérieur selon les revendications 1 et 9, caractérisée en ce que le capuchon de couverture (21) présente sur son côté arrière des bras élastiques qui s'encliquettent élastiquement dans des ouvertures de la plaque du socle (18) en forme de table.

12. Lampe d'intérieur selon les revendications 9 et 11, caractérisée en ce que les parois latérales (30) du capuchon de couverture (21) sont réalisées en correspondance des parois latérales des éléments de plaque d'éclairage (2, 3) et présentent une pente qui présente sur son extrémité libre sur le côté intérieur du capuchon de couverture (21) un bourrelet (31) qui entoure le socle (18) par l'arrière.

13. Lampe d'intérieur selon les revendications 1 et 12, caractérisée en ce que les commutateurs (19) sont mis en place en auto-encliquetage dans le capuchon de couverture (21) et pénètrent dans les évidements de réception (24) du socle (18).
